# EUROPÄISCHE PATENTANMELDUNG

(11) **EP 3 960 594 A1**
(43) Veröffentlichungstag der Anmeldung: **02.03.2022**
(21) Anmeldenummer: 21192391.7
(22) Anmeldetag: 20.08.2021
(51) Int. Cl.: B62D 59/04

(54) **VERFAHREN ZUM BETREIBEN EINES HILFSANTRIEBS FÜR EINEN ANHÄNGER, SYSTEM ZUM ANTREIBEN WENIGSTENS EINES RADS EINES SOLCHEN ANHÄNGERS SOWIE COMPUTERPROGRAMMPRODUKT UND DATENTRÄGER ZUM AUSFÜHREN DER SCHRITTE DES VERFAHRENS**

(30) Priorität: 24.08.2020 DE 102020122062
(71) Anmelder: Reich GmbH Regel- und Sicherheitstechnik, 35713 Eschenburg-Wissenbach (DE)
(72) Erfinder: BENDER, Steffen, 35713 Eschenburg (DE); SCHAURER, Oliver, 85445 Oberding (DE); DE HAAN, Wim, 6721 CE Bennekom (NL); BOSCH, Donald, 6983 HC Doesburg (NL); THEISS, Marc André, 35687 Dillenburg (DE)
(74) Vertreter: Hofstetter, Schurack & Partner

(57) **Zusammenfassung**

Die Erfindung betrifft ein Verfahren zum Betreiben eines Hilfsantriebs für einen Anhänger, bei welchem zumindest ein über eine Kommunikationsverbindung mit dem Hilfsantrieb verbundenes Endgerät (10) einem Nutzer über wenigstens eine Mensch-Maschine-Schnittstelle eine Steigungsinformation bereitstellt, welche eine Steigung eines momentan vom Anhänger befahrenen Geländes und/oder eines vom Anhänger zu befahrenden Geländes charakterisiert. Die Erfindung betrifft weiterhin ein System zum Antreiben wenigstens eines Rads eines Anhängers, umfassend wenigstens einen Hilfsantrieb zum Antreiben des Rads, wobei der Hilfsantrieb über eine Kommunikationsverbindung mit einem wenigstens eine Mensch-Maschine-Schnittstelle aufweisenden Endgerät (10) für einen Nutzer verbindbar und/oder verbunden ist, wobei das Endgerät (10) dazu ausgebildet ist, mittels der Mensch-Maschine-Schnittstelle eine Steigungsinformation bereitzustellen, welche eine Steigung eines momentan vom Anhänger befahrenen Geländes und/oder eines vom Anhänger zu befahrenden Geländes charakterisiert.

## Beschreibung

Die vorliegende Erfindung betrifft ein Verfahren zum Betreiben eines Hilfsantriebs für einen Anhänger, ein System zum Antreiben wenigstens eines Rads eines Anhängers sowie ein Computerprogrammprodukt und einen elektronisch lesbaren Datenträger, um die Schritte des Verfahrens auszuführen.

Hilfsantriebe für Anhänger, insbesondere für Wohnwagen, Bootsanhänger, Verkaufswagen, Transportanhänger und ähnliche Anhänger sind aus dem allgemeinen Stand der Technik bereits hinlänglich bekannt. Ein solcher Hilfsantrieb dient insbesondere dazu, den Anhänger in einem Zustand, in welchem der Anhänger von einer Zugmaschine abgekoppelt ist, zu bewegen. Dies ist besonders vorteilhaft bei Anhängern, die beispielsweise auf Campingplätzen oder Wohnwagen-Parkplätzen bewegt und dabei rangiert werden müssen. Bei einem solchen bekannten Hilfsantrieb ist wenigstens ein Antriebselement mit zumindest einem Rad des Anhängers in Zusammenwirken bringbar. Bei dem Antriebselement handelt es sich beispielsweise um einen Antriebswalze des Hilfsantriebs, wobei die Antriebswalze beispielsweise in Kontakt mit dem Rad bewegt und in Kontakt gehalten wird. Mithilfe wenigstens eines Motors, insbesondere eines Elektromotors, des Hilfsantriebs wird die Antriebswalze angetrieben, wodurch das sich in Zusammenwirken mit der Antriebswalze befindende Rad gedreht beziehungsweise bewegt wird. Dadurch kann der Anhänger in abgekoppeltem Zustand präzise rangiert werden.

Aufgabe der vorliegenden Erfindung ist es, ein Verfahren sowie ein System zu schaffen, mittels welchen ein Anhänger auf besonders einfache und sichere Weise bewegt, insbesondere rangiert, werden kann.

Diese Aufgabe wird erfindungsgemäß durch ein Verfahren mit den Merkmalen des Patentanspruchs 1, durch ein System mit den Merkmalen des Patentanspruchs 9 sowie durch ein Computerprogrammprodukt gemäß Anspruch 14 und einen Datenträger gemäß Anspruch 15 gelöst. Vorteilhafte Ausgestaltungen mit zweckmäßigen Weiterbildungen der Erfindung sind in den übrigen Ansprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft ein Verfahren zum Betreiben eines Hilfsantriebs für einen Anhänger, bei welchem zumindest ein über eine Kommunikationsverbindung mit dem Hilfsantrieb verbundenes Endgerät einem Nutzer über wenigstens eine Mensch-Maschine-Schnittstelle eine Steigungsinformation bereitstellt, welche eine Steigung eines momentan vom Anhänger befahrenen Geländes und/oder eines vom Anhänger zu befahrenden Geländes charakterisiert. Mit anderen Worten stellt das Endgerät dem Nutzer erfindungsgemäß Informationen über die momentan vom Hilfsantrieb bzw. von Anhänger befahrene Steigung und/oder Informationen über die Steigung im Umfeld des Hilfsantriebs bzw. Anhängers, die vom Hilfsantrieb bzw. vom Anhänger befahren werden kann oder soll, zur Verfügung. Hierdurch kann der Anhänger auf besonders einfache und sichere Weise bewegt, insbesondere rangiert, werden, da der Nutzer problematische oder sogar gefährlich zu befahrende Steigungen vermeiden kann. Unter dem Begriff "Steigung" sind im Rahmen der vorliegenden Offenbarung sowohl positive Steigungen als auch negative Steigungen, das heißt Gefälle, zu verstehen. Die Steigungsinformation kann generell "punktförmig" sein, das heißt lediglich die Steigung des momentanen Standorts des Anhängers charakterisieren, "linienförmig" sein, das heißt die Steigung entlang eines befahrenen und/oder zu befahrenden Pfades charakterisieren, oder in Form einer topografischen Karte des den Anhänger umgebenden Geländes vorliegen. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

In einer vorteilhaften Ausgestaltung der Erfindung wird die Steigungsinformation optisch und/oder akustisch und/oder haptisch bereitgestellt. Hierdurch sind verschiedene Mensch-Maschine-Interaktionsmöglichkeiten und Kombinationen hieraus gegeben, wodurch der Nutzer besonders zuverlässig mit Steigungsinformationen versorgt werden kann.

In einer weiteren vorteilhaften Ausgestaltung der Erfindung ist vorgesehen, dass die Steigungsinformation optisch als Symbol, insbesondere als ein die Steigung charakterisierendes Dreieck, und/oder als eine die Steigung charakterisierende Gradangabe und/oder als eine die Steigung charakterisierende Prozentangabe und/oder als eine die Steigung charakterisierende Farbinformation bereitgestellt wird. Ein Symbol wie beispielsweise ein Dreieck, dessen Steigung beispielsweise der tatsächlichen Steigung entsprechen kann, stellt eine besonders einfache Möglichkeit dar, um die Steigungsinformation intuitiv bereitzustellen. Vorzugsweise wird das Symbol als Teil einer graphischen Benutzeroberfläche (GUI) dargestellt. Ebenso vorteilhaft sind Angaben der Steigung in Form von Grad- und/oder Prozentangaben. Ebenso vorgesehen sein kann eine Kodierung der Steigung durch Farbinformationen. Beispielsweise können unbedenkliche Steigungen grün, bedenkliche Steigungen gelb bzw. orange und unzulässige Steigungen durch rot charakterisiert werden. Es versteht sich, dass auch andere Farbkodierungen vorgesehen sein können. Ebenso kann ein anderweitiger optischer Hinweis vorgesehen sein. Beispielsweise kann in Abhängigkeit der Steigung bzw. des Steigungswinkels ein sogenanntes "Pop-Up"-Fenster eingeblendet werden. Alternativ oder zusätzlich kann die Steigungsinformation haptisch über ein die Steigung charakterisierendes Vibrationssignal bereitgestellt werden. Die Vibration kann hinsichtlich Amplitude und/oder Frequenz und/oder Wellenform mit der Steigungsinformation korrespondieren. Beispielsweise kann die Vibration mit steigendem Betrag des Steigungswinkels zunehmen. Alternativ können für Steigungen und Gefälle unterschiedliche Vibrationsarten vorgesehen sein. Ebenso kann vorgesehen sein, dass die Vibration nur im Fall einer Warnung, das heißt wenn eine unzulässige Steigung momentan befahren wird oder in Kürze befahren werden könnte, erzeugt wird. Alternativ oder zusätzlich ist vorgesehen, dass die Steigungsinformation akustisch über eine die Steigung charakterisierende Ton- und/oder Geräuschausgabe bereitgestellt wird. In einfachster Ausgestaltung wird auch in diesem Fall nur im Fall, dass eine unzulässige Steigung momentan befahren wird oder in Kürze befahren werden könnte, ein Warn- bzw. Signalton erzeugt. Ebenso kann vorgesehen sein, dass ein Ton und/oder Geräusch erzeugt wird, dass beispielsweise hinsichtlich Amplitude und/oder Frequenz und/oder Wellenform bzw. Art des Geräuschs mit der Steigungsinformation korrespondiert. Weiterhin können für Steigungen und Gefälle unterschiedliche Klangsignale vorgesehen sein

In einer weiteren vorteilhaften Ausgestaltung der Erfindung ist vorgesehen, dass das Endgerät dem Nutzer über die Mensch-Maschine-Schnittstelle eine Warninformation bereitstellt, wenn das vom Anhänger befahrene Gelände und/oder das vom Anhänger zu befahrende Gelände eine unzulässige Steigung aufweist. Hierdurch kann der Nutzer davor bewahrt werden, mit dem Anhänger eine unzulässige Steigung bzw. ein unzulässiges Gefälle zu befahren.

In einer weiteren vorteilhaften Ausgestaltung der Erfindung ist vorgesehen, dass die Warninformation optisch und/oder akustisch und/oder haptisch bereitgestellt wird. Bezüglich der Bereitstellungsarten gelten die vorstehend im Zusammenhang mit der Steigungsinformation beschriebenen Möglichkeiten.

In einer weiteren vorteilhaften Ausgestaltung der Erfindung ist vorgesehen, dass die Warninformation optisch als Symbol und/oder in Form eines Farbumschlags und/oder über eine Hinweismeldung und/oder haptisch über ein Vibrationssignal und/oder akustisch über einen Warnton bereitgestellt wird. Beispielsweise können unzulässige Steigungen bzw. Gefälle in einer Anzeige rot gekennzeichnet werden. Es versteht sich, dass auch andere Farbkodierungen vorgesehen sein können. Ebenso kann ein anderweitiger optischer Hinweis vorgesehen sein. Beispielsweise kann als Warnung ein sogenanntes "Pop-Up"-Fenster eingeblendet werden. Alternativ oder zusätzlich kann eine Warnung in der vorstehend beschrieben Weise über ein Vibrationssignal und/oder über ein akustisches Signal ausgegeben werden, um den Nutzer davor zu warnen, den Anhänger weiter zu bewegen bzw. weiter in die momentan vorgesehene Richtung zu bewegen.

In einer weiteren vorteilhaften Ausgestaltung der Erfindung ist vorgesehen, dass das Endgerät versucht, den Hilfsantrieb zu einer Betriebsänderung zu veranlassen, wenn das vom Anhänger befahrene Gelände und/oder das vom Anhänger zu befahrende Gelände eine unzulässige Steigung aufweist. Mit anderen Worten versucht das Endgerät, wenn es das momentane oder absehbare Befahren einer unzulässigen Steigung bzw. eines unzulässigen Gefälles erkennt, den Hilfsantrieb aktiv zu einer Betriebsänderung zu veranlassen, durch welche die bereits bestehende oder drohende Gefahr verringert und vorzugsweise gänzlich ausgeräumt wird. Beispielsweise kann das Endgerät ein Steuer- und/oder Regelsignal erzeugen und an den Hilfsantrieb bzw. an seine Steuereinrichtung übermitteln, mittels welchem der Hilfsantrieb dazu veranlasst wird, die momentane Geschwindigkeit des Anhängers zu verringern bzw. den Anhänger vollständig zu stoppen und/oder die momentane Richtung des Anhängers umzukehren, das rückwärts zu fahren, und/oder die momentane Richtung zu ändern, das heißt den Anhänger zu drehen, vorzugsweise in Richtung eines angrenzenden Geländes mit tolerablen Steigungswerten.

In einer weiteren vorteilhaften Ausgestaltung der Erfindung ist vorgesehen, dass die Steigungsinformation mittels einer Steuereinrichtung anhand von wenigstens einem Betriebsparameter ermittelt wird, welcher aus einer Gruppe gewählt wird, die Geschwindigkeit und/oder Beschleunigung des Anhängers, Leistungsaufnahme des Hilfsantriebs, Standortinformation des Hilfsantriebs und/oder des Anhängers und/oder Bildinformation des vom Anhänger befahrenen Geländes und/oder des vom Anhänger zu befahrenden Geländes umfasst. Hierdurch können bedarfsweise unterschiedliche Datenquellen, einzeln oder in beliebiger Kombination, zur Ermittlung von Steigungsinformationen herangezogen werden. In einfachster Ausgestaltung wird der momentane Steigungswinkel durch einen Beschleunigungssensor auf der Hauptsteuerungsplatine im Anhänger selbst ermittelt und an das Endgerät gesendet. Alternativ oder zusätzlich können beispielsweise Geländedaten anhand von Standortinformationen (GPS) und/oder von Kamerabildern bzw. Videodaten der Umgebung akquiriert und zur Ermittlung von Steigungsinformationen herangezogen werden.

Ein zweiter Aspekt der Erfindung betrifft ein System zum Antreiben wenigstens eines Rads eines Anhängers, umfassend wenigstens einen Hilfsantrieb zum Antreiben des Rads, wobei der Hilfsantrieb über eine Kommunikationsverbindung mit einem wenigstens eine Mensch-Maschine-Schnittstelle aufweisenden Endgerät für einen Nutzer verbindbar und/oder verbunden ist, wobei das Endgerät erfindungsgemäß dazu ausgebildet ist, mittels der Mensch-Maschine-Schnittstelle eine Steigungsinformation bereitzustellen, welche eine Steigung eines momentan vom Anhänger befahrenen Geländes und/oder eines vom Anhänger zu befahrenden Geländes charakterisiert. Hierdurch kann der Anhänger auf besonders einfache und sichere Weise bewegt, insbesondere rangiert, werden, da der Nutzer über die befahrene oder zu befahrende Steigung informiert wird und damit Geländebereiche mit problematischen oder sogar gefährlich zu befahrenden Steigungen zuverlässig vermeiden kann. Das Endgerät kann grundsätzlich dazu ausgebildet sein, die Steigungsinformation gegebenenfalls unter Einbeziehung von Daten des Hilfsantriebs zu ermitteln. Alternativ oder zusätzlich kann das Endgerät dazu ausgebildet sein, auf Steigungsinformationen zuzugreifen, die durch den Hilfsantrieb bzw. durch eine Erfassungseinrichtung des Hilfsantriebs ermittelt und über die Kommunikationsverbindung an das Endgerät übermittelt werden. Weitere Merkmale und deren Vorteile sind den Beschreibungen des ersten Erfindungsaspekts zu entnehmen.

In einer vorteilhaften Ausgestaltung der Erfindung ist vorgesehen, dass die Kommunikationsverbindung drahtlos und/oder kabelgebunden bewirkt und/oder bewirkbar ist und/oder dass das Endgerät als mobiles Endgerät, insbesondere als Fernbedienung und/oder Mobiltelefon und/oder tragbarer Computer, ausgebildet ist. Mit anderen Worten kann das Endgerät zum Datenaustausch über eine Kabelverbindung mit dem Hilfsantrieb verbunden sein oder Daten drahtlos mit dem Hilfsantrieb austauschen. Vorzugsweise handelt es sich bei dem Endgerät um ein mobiles Endgerät, beispielsweise eine einfache Fernbedienung, welche beispielsweise lediglich die Funktion hat, den Hilfsantrieb fernzusteuern. Vorzugsweise handelt es sich bei dem Endgerät jedoch beispielsweise um ein mobiles Kommunikationsendgerät wie beispielsweise ein Handy oder ein Smartphone, welches zum drahtlosen Fernbedienen des Hilfsantriebs genutzt wird. Ein solches mobiles Kommunikationsendgerät kann beispielsweise ferner dazu genutzt werden, Telefongespräche zu führen. Ferner ist es denkbar, dass es sich bei dem mobilen Endgerät um ein Tablet beziehungsweise einen Tablet-PC, einen Laptop, ein Notebook oder dergleichen handelt.

In einer weiteren vorteilhaften Ausgestaltung der Erfindung ist vorgesehen, dass der Anhänger als Wohnwagen, Bootsanhänger, Verkaufswagen, Transportanhänger oder Autotransportanhänger ausgebildet ist. Hierdurch können die erfindungsgemäßen Vorteile für unterschiedliche Anhängerarten realisiert werden.

In einer weiteren vorteilhaften Ausgestaltung der Erfindung ist vorgesehen, dass die Mensch-Maschine-Schnittstelle einen vorzugsweise berührungsempfindlichen Bildschirm und/oder wenigstens einen haptischen Aktuator und/oder wenigstens einen Lautsprecher zum Bereitstellen der Steigungsinformation umfasst. Hierdurch kann die Steigungsinformation besonders flexibel bereitgestellt werden.

In einer weiteren vorteilhaften Ausgestaltung der Erfindung ist vorgesehen, dass der Hilfsantrieb wenigstens einen Beschleunigungssensor aufweist, mittels welchem die Steigungsinformation ermittelbar ist. Dies stellt eine technisch einfache und kostengünstige Möglichkeit zum Ermitteln von Steigungsinformationen dar. Es Vorzugsweise werden zwei oder mehr Beschleunigungssensoren verwendet. Die zwei oder mehr Beschleunigungssensoren können vorteilhaft eine Messung in zwei oder drei Raumachsen vornehmen, beispielsweise in einer Fahrtrichtung und in einer Hochrichtung. Alternativ oder zusätzlich können neben dem wenigsten einen Beschleunigungssensor ein oder mehrere andere Sensoren als Datenquelle für die Ermittlung der Steigungsinformation verwendet werden, beispielsweise ein oder mehrere Positionssensoren und/oder ein oder mehrere Neigungssensoren.

Ein dritter Aspekt der Erfindung betrifft ein Computerprogrammprodukt, welches in einen Speicher eines Endgeräts eines Systems gemäß dem zweiten Erfindungsaspekt ladbar ist, mit Programm-Mitteln, um die Schritte des Verfahrens gemäß dem ersten Erfindungsaspekt auszuführen, wenn das Programm durch das Endgerät ausgeführt wird. Hierdurch kann der Anhänger auf besonders einfache und sichere Weise bewegt, insbesondere rangiert, werden, da der Nutzer des Endgeräts Geländebereiche mit problematischen oder sogar gefährlich zu befahrenden Steigungen zuverlässig vermeiden kann. Die vorliegende Erfindung kann die Form eines Computerprogrammprodukts haben, das aus einem oder mehreren Programmmodulen besteht, auf die von einem computerverwendbaren oder computerlesbaren Medium, das Programmcode zur Verwendung durch oder in Verbindung mit einem oder mehreren Computern, Prozessoren oder Befehlsausführungssystemen speichert, zugegriffen werden kann. Für die Zwecke dieser Beschreibung kann ein computerverwendbares oder computerlesbares Medium jede Vorrichtung sein, die das Programm zur Verwendung durch oder in Verbindung mit dem Befehlsausführungssystem, der Vorrichtung oder dem Gerät enthalten, speichern, kommunizieren, propagieren oder transportieren kann. Das Medium kann ein elektronisches, magnetisches, optisches, elektromagnetisches, Infrarot- oder Halbleitersystem (oder ein Gerät oder eine Vorrichtung) oder ein Ausbreitungsmedium an und für sich sein, da Signalträger nicht in der Definition eines physischen computerlesbaren Mediums enthalten sind, einschließlich eines Halbleiter- oder Festkörperspeichers, eines Magnetbandes, einer herausnehmbaren Computerdiskette, eines Direktzugriffsspeichers (RAM), eines Festwertspeichers (ROM), einer starren Magnetplatte und einer optischen Platte wie Compact-Disk-Schreib-Lesespeicher (CD-ROM), Compact-Disk-Lesen/Schreiben und DVD. Sowohl die Prozessoren als auch der Programmcode zur Implementierung jedes Aspekts der Technologie können zentralisiert, verteilt oder eine Kombination davon sein.

Ein vierter Aspekt der Erfindung betrifft einen elektronisch lesbaren Datenträger mit darauf gespeicherten elektronisch lesbaren Steuerinformationen, welche zumindest ein Computerprogrammprodukt gemäß dem dritten Erfindungsaspekt umfassen und derart ausgestaltet sind, dass sie bei Verwendung des Datenträgers in einem Endgerät eines Systems gemäß dem ersten Erfindungsaspekt ein Verfahren gemäß dem zweiten Erfindungsaspekt durchführen. Hierbei kann das Ermitteln und/oder Übertragen und/oder Bereitstellen der Steigungsinformation insbesondere mittels eines Prozessors ausgeführt werden, insbesondere mittels einer Recheneinheit des Endgeräts und/oder des Hilfsantriebs ausgeführt werden. Ein vorstehend beschriebenes Verfahren kann auch in Form eines Computerprogrammprodukts vorliegen, das das Verfahren auf einer Steuereinheit des Endgeräts und/oder des Hilfsantriebs implementiert, wenn es auf der Steuereinheit ausgeführt wird. Ebenso kann ein elektronisch lesbarer Datenträger mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in einer Steuereinheit ein beschriebenes Verfahren durchführen. Das Computerprogrammprodukt kann auch aus einem kabellos angebundenen Speicher auf das Endgerät heruntergeladen werden. Ebenso kann eine Cloud-Lösung vorgesehen sein, bei welcher das Computerprogramm teilweise oder im Wesentlichen auf einem entfernten Rechner ausgeführt wird und lediglich bestimmte Daten mit dem Endgerät austauscht. Beispielsweise kann das Endgerät anhand von Standortinformationen auf topographische Geländedaten zugreifen, welche ihrerseits durch einen kabellos angebundenen Speicher bereitgestellt werden.

Ein weiterer Aspekt der Erfindung betrifft einen Anhänger, insbesondere einen Wohnwagen, Bootsanhänger, Verkaufswagen, Transportanhänger, oder Autotransportanhänger, mit wenigstens einem System gemäß dem zweiten Erfindungsaspekt. Mit Hilfe des erfindungsgemäßen Systems kann der erfindungsgemäße Anhänger auf besonders einfache und sichere Weise bewegt, insbesondere rangiert, werden. Weitere Merkmale und deren Vorteile sind den Beschreibungen der vorhergehenden Erfindungsaspekte zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigen:
- Fig. 1: eine schematische Draufsicht eines erfindungsgemäßen Endgeräts zum Betreiben eines Hilfsantriebs nach dem erfindungsgemäßen Verfahren;
- Fig. 2: eine weitere schematische Draufsicht des Endgeräts; und
- Fig. 3 bis Fig. 6: jeweils schematische Draufsichten einer Anzeige des erfindungsgemäßen Endgeräts.

In den Figuren sind gleiche oder funktionsgleiche Elemente mit gleichen Bezugszeichen versehen.

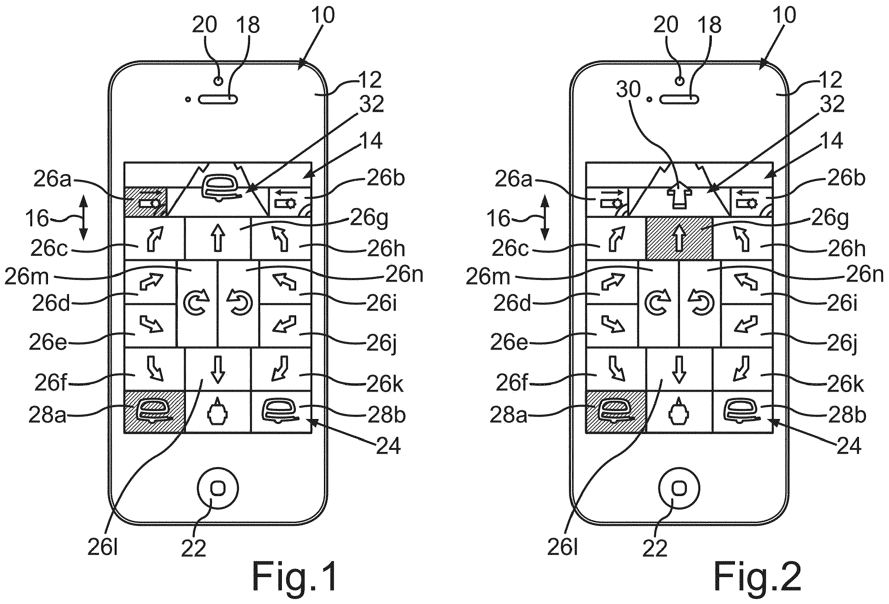

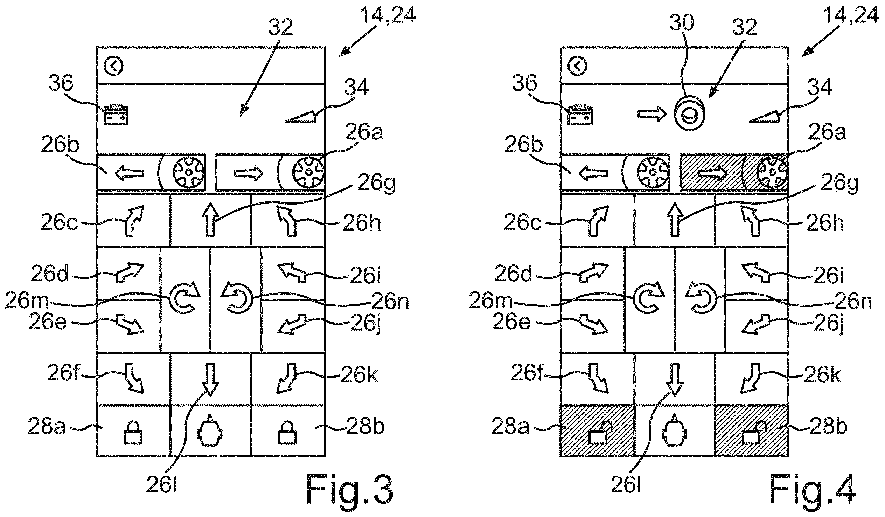

Das Endgerät 10 ist als mobiles Endgerät 10 ausgebildet und umfasst ein Gehäuse 12 sowie ein Anzeige 14, welche als berührungsempfindlicher Bildschirm ausgebildet ist. Alternativ kann als Endgerät 10 eine kabelgebundene oder drahtlose Fernbedienung vorgesehen sein, welche die in Fig. 3 bis Fig. 6 näher beschriebene Steigungsanzeige und/oder Warnfunktion aufweist. Das Endgerät 10 weist eine in Fig. 1 durch einen Doppelpfeil 16 veranschaulichte Hochrichtung auf, wobei bezogen auf diese Hochrichtung über der Anzeige 14 wenigstens ein Lautsprecher 18 zum Wiedergeben von Tönen angeordnet ist. Ferner ist in Hochrichtung des Endgeräts 10 über dem Lautsprecher 18 eine Kamera 20 zum Erfassen von Bildern angeordnet. Dies bedeutet, dass das Endgerät 10 den Lautsprecher 18 und die Kamera 20 aufweist. Generell kann das Endgerät 10 aber auch ohne Lautsprecher 18 und/oder Kamera 20 ausgebildet sein. Weiterhin kann eine Einrichtung (nicht gezeigt) zur Erzeugung haptischer Signale vorgesehen sein. Im vorliegenden Fall bilden die Anzeige 14 und der Lautsprecher 18 eine Mensch-Maschine-Schnittstelle zur direkten Interaktion des Endgeräts 10 mit dem Nutzer.

Bezogen auf die Hochrichtung des mobilen Endgeräts 10 ist unter der Anzeige 14 ein grundsätzlich optionales Bedienelement 22 des mobilen Endgeräts 10 angeordnet. Das Bedienelement 22 ist dabei als mechanisches Bedienelement ausgebildet, wobei das Bedienelement 22 vorliegend als Taster ausgebildet ist. Dies bedeutet, dass das Bedienelement 22 zwischen einer in Fig. 1 und 2 gezeigten Ausgangsstellung und wenigstens einer von der Ausgangsstellung unterschiedlichen Bedienstellung bewegbar ist. In der Bedienstellung ist im Vergleich zur Ausgangsstellung wenigstens ein zumindest mittelbar an dem Bedienelement 22 abgestütztes Federelement gespannt, so dass das Federelement eine Federkraft bereitstellt, welche auf das Bedienelement 22 in der Bedienstellung wirkt. Beispielsweise kann ein Nutzer und somit eine Person des mobilen Endgeräts 10 das Bedienelement 22 aus der Ausgangsstellung in die Bedienstellung bewegen, wodurch das Federelement gespannt wird. Hierzu beaufschlagt der Nutzer das Bedienelement 22 mit einer Kraft, wobei der Nutzer das Bedienelement 22 beispielsweise drückt. Lässt der Nutzer das Bedienelement 22 los, so kann sich das Federelement wieder entspannen, so dass das Bedienelement 22 mittels der Federkraft aus der Bedienstellung zurück in die Ausgangsstellung bewegt wird. Durch ein solches durch den Nutzer bewirktes Bewegen des Bedienelements 22 aus der Ausgangsstellung in die Bedienstellung kann der Nutzer das mobile Endgerät 10 bedienen, wobei das Bewegen des Bedienelements 22 auch als Betätigen oder Bedienen bezeichnet wird. Generell kann das Bedienelement 22 aber auch über andere Mechanismen betätigt werden, beispielsweise als elektronischer Taster ohne bewegliche Teile.

Wie im Folgenden noch genauer erläutert wird, wird das mobile Endgerät 10 zum Durchführen eines Verfahrens zum Betreiben eines Hilfsantriebs für einen Anhänger (nicht gezeigt), insbesondere einen Wohnwagen, einen Bootsanhänger, einen Verkaufswagen, einen Transportanhänger oder einen Autotransportanhänger, genutzt. Der Hilfsantrieb ist beispielsweise zumindest mittelbar an einem Rahmen des Anhängers gehalten und weist beispielsweise eine Antriebseinheit mit einem, zwei oder mehr Motoren, insbesondere Elektromotoren, auf. Ferner weist der Hilfsantrieb wenigstens ein Antriebselement insbesondere in Form einer Antriebswalze auf. Der Anhänger weist wenigstens eine Achse auf, welche zwei in Querrichtung beziehungsweise Fahrzeugquerrichtung des Anhängers gegenüberliegend angeordnete Bodenkontaktelemente in Form von Rädern umfasst. Die Räder sind zumindest mittelbar an dem Rahmen des Anhängers gehalten und relativ zu dem Rahmen drehbar, so dass der Anhänger über die Räder auf einem Boden beziehungsweise an einer Fahrbahn abrollen kann. Vorzugsweise ist jedem Rad der Achse eine Antriebseinheit des Hilfsantriebs zugeordnet.

Die Antriebswalze ist beispielsweise mittels eines ersten der Motoren in Längsrichtung beziehungsweise Fahrzeuglängsrichtung des Anhängers translatorisch zwischen wenigstens einer Gebrauchsstellung und wenigstens einer Nicht-Gebrauchsstellung bewegbar. In der Gebrauchsstellung befindet sich die Antriebswalze in Kontakt beziehungsweise Stützanlage mit dem zugeordneten Rad, wobei die Antriebswalze in Kontakt mit dem zugeordneten Rad gehalten und beispielsweise mittels des ersten Motors gegen das Rad gedrückt wird. Somit wirkt die Antriebswalze in der Gebrauchsstellung mit dem Rad zusammen. Der zweite Motor dient beispielsweise dazu, die Antriebswalze anzutreiben. Befindet sich die Antriebswalze in der Gebrauchsstellung und wird die Antriebswalze mittels des zweiten Motors angetrieben, so wird dadurch das der Antriebswalze zugeordnete Rad angetrieben, das heißt relativ zu dem Rahmen gedreht, wodurch der Anhänger angetrieben beziehungsweise bewegt wird. Dadurch ist es möglich, den Anhänger zu bewegen und insbesondere zu rangieren, wenn der Anhänger nicht mit einer Zugmaschine gekoppelt ist. Ein solcher Zustand, in welcher der Anhänger nicht mit einer Zugmaschine gekoppelt ist, wird auch als abgekoppelter Zustand bezeichnet.

In der Nicht-Gebrauchsstellung ist die Antriebswalze von dem zugeordneten Rad beabstandet, so dass die Antriebswalze nicht mit dem Rad zusammenwirkt. Würde die Antriebswalze in der Nicht-Gebrauchsstellung mittels des zweiten Motors angetrieben werden, so würde dann das zugeordnete Rad nicht angetrieben werden, da die Antriebswalze nicht mit dem zugeordneten Rad zusammenwirkt.

Im Rahmen des Verfahrens stellt das mobile Endgerät 10 eine graphische Benutzeroberfläche 24 (GUI) bereit, mittels welcher der zuvor genannte Nutzer den Hilfsantrieb bedienen kann, so dass der Nutzer den abgekoppelten Anhänger über das mobile Endgerät 10 und den Hilfsantrieb bewegen und somit rangieren kann.

Im Rahmen des Verfahrens wird beziehungsweise ist das mobile Endgerät 10 mit dem Hilfsantrieb über eine vorliegend drahtlose Kommunikationsverbindung verbunden. Hierzu umfasst das mobile Endgerät 10 ein in den Figuren nicht erkennbares erstes Kommunikationsmodul, wobei der Hilfsantrieb ein in den Figuren nicht erkennbares, zweites Kommunikationsmodul umfasst. Über diese Kommunikationsmodule wird die drahtlose Kommunikationsverbindung zwischen dem Hilfsantrieb und dem mobilen Endgerät 10 aufgebaut, so dass beispielsweise das mobile Endgerät über das erste Kommunikationsmodul Daten an das zweite Kommunikationsmodul und somit den Hilfsantrieb übermitteln kann, wobei der Hilfsantrieb über das zweite Kommunikationsmodul die vom mobilen Endgerät 10 übermittelten Daten empfangen kann. Alternativ oder zusätzlich ist es denkbar, dass der Hilfsantrieb über das zweite Kommunikationsmodul Daten an das erste Kommunikationsmodul und somit das mobile Endgerät 10 übermitteln kann, wobei das mobile Endgerät 10 über das erste Kommunikationsmodul die vom Hilfsantrieb beziehungsweise dem zweiten Kommunikationsmodul übermittelten Daten empfangen kann. Ebenso kann grundsätzlich eine kabelgebundene Kommunikationsverbindung vorgesehen sein.

Sind somit die Kommunikationsmodule sowohl zum Senden als auch zum Empfangen der jeweiligen Daten ausgebildet, so ist eine bidirektionale Kommunikation zwischen dem mobilen Endgerät 10 und dem Hilfsantrieb möglich, so dass das mobile Endgerät 10 und der Hilfsantrieb Daten und somit Informationen in beide Richtungen austauschen können. Eine solche drahtlose Kommunikationsverbindung ist vorteilhaft, da der Nutzer dann um den Anhänger herumlaufen und den Anhänger somit besonders gut beobachten kann, während der Nutzer das mobile Endgerät 10 in seinen Händen hält und beispielsweise während der Nutzer den Anhänger über den Hilfsantrieb, die drahtlose Kommunikationsverbindung und das mobile Endgerät 10 rangiert.

Da das mobile Endgerät 10 die graphische Benutzeroberfläche 24 auf der beziehungsweise mittels der Anzeige 14 bereitstellt, weist das mobile Endgerät 10 im Rahmen des Verfahrens die graphische Benutzeroberfläche 24 auf. Die graphische Benutzeroberfläche 24 umfasst eine Mehrzahl von Funktionsbedienelementen 26a-n, mittels welchen jeweils wenigstens eine Funktion des Hilfsantriebs von dem Nutzer über das mobile Endgerät 10 und die Kommunikationsverbindung bewirkbar ist. Mit anderen Worten sind mithilfe der Funktionsbedienelemente 26a-n jeweilige, voneinander unterschiedliche Funktionen des Hilfsantriebs bewirkbar.

Die Funktionsbedienelemente 26a, 26b dienen beispielsweise dazu, die jeweilige, dem jeweiligen Rad zugeordnete Antriebswalze einzuschwenken und auszuschwenken. Unter dem Einschwenken ist die Bewegung der jeweiligen Antriebswalze aus der Nicht-Gebrauchsstellung in die Gebrauchsstellung zu verstehen, wobei unter dem Ausschwenken die umgekehrte Bewegung der Antriebswalze aus der Gebrauchsstellung in die Nicht-Gebrauchsstellung zu verstehen ist. Über die anderen Funktionsbedienelemente 26c-n können unterschiedliche Bewegungen beziehungsweise Fahr- oder Rangiermanöver des Anhängers über den Hilfsantrieb bewirkt werden. Mittels des Funktionsbedienelements 26g wird beispielsweise eine einfache Vorwärtsfahrt des Anhängers bewirkt, ohne dass sich der Anhänger dreht beziehungsweise eine Kurve fährt. Demzufolge wird beispielsweise über das Funktionsbedienelement 26I eine einfache Rückwärtsfahrt des Anhängers bewirkt, ohne dass dieser eine Kurve fährt. Die Funktionsbedienelemente 26c-f und 26h-k dienen dazu, Kurvenfahrten des Anhängers nach vorne beziehungsweise nach hinten zu bewirken, wobei dann der Anhänger beispielsweise jeweilige Kurven mit unterschiedlichen Kurvenradien fährt. Ferner dienen die Funktionsbedienelemente 26m, 26n zum Bewirken jeweiliger Drehfunktionen des Hilfsantriebs und somit des Anhängers.

Aus Fig. 1 ist erkennbar, dass das jeweilige Funktionsbedienelement 26a-n wenigstens einen Richtungspfeil aufweist, mittels welchem das jeweilige Fahrmanöver, insbesondere die Richtung beziehungsweise Fahrtrichtung des Anhängers bei dem jeweiligen Fahrmanöver, veranschaulicht wird. Dabei sind die Richtungspfeile der Funktionsbedienelemente 26c-f und 26h-k unterschiedlich gekrümmt, um dadurch die zuvor genannten, unterschiedlichen Kurvenradien zu veranschaulichen. Wie durch die Richtungspfeile der Funktionsbedienelemente 26m-n veranschaulicht ist, ist im Rahmen der jeweiligen Drehfunktion eine Drehung auf der Stelle zu verstehen. Mit anderen Worten wird mittels der jeweiligen Drehfunktion über den Hilfsantrieb eine Drehung des Anhängers um dessen Hochrichtung bewirkt, während eine translatorische Bewegung des Anhängers nach vorne oder hinten zumindest im Wesentlichen unterbleibt. Dadurch kann der Anhänger beispielsweise auf sehr engem Raum gedreht beziehungsweise gewendet werden. Dies ist insbesondere bei einem einachsigen Anhänger vorgesehen, wobei der Anhänger genau eine Achse aufweist.

Mittels der Funktionsbedienelemente 26c, 26h, 26f und 26k kann der Nutzer als das jeweilige Fahrmanöver eine Rangierfunktion bewirken, bei welcher der Hilfsantrieb eines der Räder in eine Drehrichtung mit einer ersten Drehzahl und das dem einen Rad in Querrichtung des Anhängers gegenüberliegendes andere Rad in die Drehrichtung mit einer von der ersten Drehzahl unterschiedlichen, zweiten Drehzahl antreibt, welche größer als Null ist. Dabei treibt der Hilfsantrieb beispielsweise das kurvenäußere Rad mit der ersten Drehzahl und das kurveninnere Rad mit der zweiten Drehzahl an, welcher geringer als die erste Drehzahl und größer als Null ist.

Vorzugsweise beträgt die zweite Drehzahl mindestens ein Zehntel und höchstens drei Achtel der zweiten Drehzahl. Die oben genannte Vorwärtsfahrt ist beispielsweise eine Antriebsfunktion des Hilfsantriebs. Bei dieser Antriebsfunktion treibt der Hilfsantrieb den Anhänger entlang einer geraden Linie an, indem der Hilfsantrieb die Räder mit einer dritten Drehzahl antreibt, die 100% entspricht. Im Vergleich zu der Antriebsfunktion ist es bei der Rangierfunktion vorgesehen, dass die erste Drehzahl in einem Bereich von einschließlich 80% bis einschließlich 100% der dritten Drehzahl und die zweite Drehzahl in einem Bereich von einschließlich 10% bis einschließlich 30% der dritten Drehzahl liegt. Mit anderen Worten wird beispielsweise das kurvenäußere Rad mit 80% bis 100% der dritten Drehzahl angetrieben, während das kurveninnere Rad mit 10% bis 30% der dritten Drehzahl angetrieben wird. Diese Rangierfunktion ist vorzugsweise bei einem einachsigen Anhänger und bei einem mehrachsigen Anhänger vorgesehen.

Bei einem mehrachsigen Anhänger ist die oben genannte Drehfunktion beispielsweise folgendermaßen ausgebildet: Solange der Nutzer beispielsweise eines der Funktionsbedienelemente 26m, 26n betätigt hält, wird:
- während einer ersten Zeitspanne ein erstes der Räder mit der ersten Drehzahl in eine erste Drehrichtung und das dem ersten Rad gegenüberliegende, zweite Rad mit der zweiten Drehzahl in die erste Drehrichtung mittels des Hilfsantriebs gedreht,
- während einer sich an die erste Zeitspanne anschließenden, zweiten Zeitspanne das zweite Rad mit der ersten Drehzahl in eine der ersten Drehrichtung entgegengesetzte, zweite Drehrichtung und das erste Rad mit der zweiten Drehzahl in die zweite Drehrichtung mittels des Hilfsantriebs gedreht, und
- während einer sich an die zweite Zeitspanne anschließenden, dritten Zeitspanne das Rad mit der ersten Drehzahl in die erste Drehrichtung und das zweite Rad mit der zweiten Drehzahl in die erste Drehrichtung mittels des Hilfsantriebs gedreht.

Vorzugsweise ist die zweite Zeitspanne länger als die erste und die dritte Zeitspanne, wobei die erste und die dritte Zeitspanne beispielsweise gleichlang sind. Insbesondere dauern die erste Zeitspanne und die dritte Zeitspanne zumindest 5 Sekunden, wobei die zweite Zeitspanne vorzugsweise mindestens 10 Sekunden dauert. Hierdurch kann ein besonders platzsparendes Wenden des mehrachsigen Anhängers realisiert werden. Der Bewegungsablauf dieser Drehfunktion, insbesondere für einen mehrachsigen Anhänger, ist besonders präzise in der EP 1 790 555 A1 beschrieben, deren Offenbarung vollständig in die vorliegende Offenbarung aufgenommen wird und als Teil der vorliegenden Offenbarung anzusehen ist.

Es versteht sich, dass die Funktionsbedienelemente 26a-n der GUI 24 grundsätzlich optionale Merkmale darstellen und dass auch eine abweichende Anzahl, Art, Anordnung und grafische Anmutung von Funktionsbedienelementen vorgesehen sein kann.

Ferner stellt das mobile Endgerät 10 als weiteres grundsätzlich optionales Merkmal zwei voneinander unterschiedliche und von den Funktionsbedienelementen 26a-n unterschiedliche Sicherheitsbedienelemente 28a, 28b bereit, wobei die Sicherheitsbedienelemente 28a, 28b vorliegend ebenfalls Bestandteile der GUI 24 sind und demzufolge auf der Anzeige 14 beziehungsweise mittels dieser angezeigt werden.

Die Funktionsbedienelemente 26a-n und die Sicherheitsbedienelemente 28a, 28b sind im Gegensatz zum ebenfalls optionalen Bedienelement 22 nicht etwa mechanische Bedienelemente, sondern Bedienflächen oder Bedienfelder, welche auf dem berührungsempfindlichen Bildschirm (Anzeige 14) bereitgestellt beziehungsweise angezeigt werden. Dies bedeutet, dass die Funktionsbedienelemente 26a-n und die Sicherheitsbedienelemente 28a, 28b jeweilige Teilbereiche oder Teilflächen der graphischen Benutzeroberfläche 24 sind, wobei diese Teilflächen beziehungsweise Teilbereiche (Funktionsbedienelemente 26a-n und Sicherheitsbedienelemente 28a, 28b) nebeneinander angeordnet sind und sich somit hinsichtlich ihrer jeweiligen Position auf der Anzeige 14 voneinander unterscheiden. Dabei sind die Sicherheitsbedienelemente 28a, 28b bezogen auf die Hochrichtung des mobilen Endgeräts 10 unter den Funktionsbedienelementen 26a-n und insbesondere in seitlichen Randbereichen der Anzeige 14 beziehungsweise der graphischen Benutzeroberfläche 24 angeordnet. Es versteht sich, dass das Endgerät 10 grundsätzlich auch in Form einer "klassischen" Fernbedienung ausgebildet sein kann und dass die Funktionsbedienelemente 26a-n und/oder die Sicherheitsbedienelemente 28a, 28b in diesem Fall als jeweilige Schalter bzw. Schaltflächen ausgebildet sind.

Um nun einen besonders sicheren Betrieb des Hilfsantriebs und somit ein sicheres Rangieren des Anhängers mittels des Hilfsantriebs realisieren zu können, sind die Funktionsbedienelemente 26a-n in Abhängigkeit von wenigstens einer durch den Nutzer bewirkten Betätigung des jeweiligen Sicherheitsbedienelements 28a, 28b für das Bewirken der jeweiligen Funktion freigebbar. Mit anderen Worten ist es im Rahmen des Verfahrens vorgesehen, dass das jeweilige Funktionsbedienelement 26a-n in Abhängigkeit von wenigstens einer durch den Nutzer bewirkten Betätigung des Sicherheitsbedienelements 28a, 28b für das Bewirken der jeweiligen Funktion freigegeben wird. Um die jeweilige Funktion, das heißt das jeweilige Fahrmanöver des Anhängers mittels des Hilfsantriebs über die drahtlose Kommunikationsverbindung und das mobile Endgerät 10 tatsächlich zu bewirken, muss der Nutzer nicht nur das jeweils entsprechende Funktionsbedienelement 26a-n, sondern auch wenigstens eines der Sicherheitsbedienelemente 28a, 28b betätigen. Das Betätigen erfolgt derart, dass der Nutzer die Anzeige 14 im Bereich des jeweiligen Funktionsbedienelements 26a-n beziehungsweise im Bereich des jeweiligen Sicherheitsbedienelements 28a, 28b berührt. Eine solche Berührung zwischen dem Nutzer und der Anzeige 14 wird mittels des berührungsempfindlichen Bildschirms erfasst.

Aus Fig. 1 ist erkennbar, dass das jeweilige Sicherheitsbedienelement 28a, 28b ein Symbol in Form eines Buchstabens aufweist. Dieser Buchstabe ist vorliegend eine kleines "e". In Fig. 1 und 2 ist das Sicherheitsbedienelement 28a durch den Nutzer betätigt, wobei das Sicherheitsbedienelement 28b nicht durch den Nutzer betätigt, das heißt unbetätigt oder nicht-betätigt ist. In betätigtem Zustand weist das Symbol des Sicherheitsbedienelements 28a, 28b die gleiche Farbe wie im nicht-betätigten Zustand auf. Sowohl im betätigtem als auch in unbetätigtem Zustand ist das jeweilige Symbol des jeweiligen Sicherheitsbedienelements 28a, 28b mit einer farbigen Fläche hinterlegt, wobei die Fläche in betätigtem Zustand eine erste Farbe und im nicht-betätigten Zustand eine von der ersten Farbe unterschiedliche, zweite Farbe aufweist. Diese farbige Fläche, deren Farbe in Abhängigkeit von dem Bestätigen des Sicherheitsbedienelements 28a, 28b verändert wird, ist somit ein Symbol, mittels welchem dem Nutzer optisch kommuniziert wird, dass der Nutzer das Sicherheitsbedienelement 28a, 28b betätigt beziehungsweise eine solche, durch den Nutzer bewirkte Betätigung des Sicherheitsbedienelements 28a, 28b erfasst wird.

Analoges trifft auch auf die Funktionsbedienelemente 26a-n zu. Der jeweilige Richtungspfeil weist im betätigten Zustand eine erste Farbe und im nicht-bestätigten Zustand eine von der ersten Farbe, unterschiedliche zweite Farbe auf und ist sowohl im betätigten Zustand als auch im nicht-bestätigtem Zustand mit einer farbigen Fläche hinterlegt, welche in bestätigtem Zustand eine erste Farbe und im nicht-betätigtem Zustand eine von der ersten Farbe unterschiedliche, zweite Farbe aufweist.

Berührt der Nutzer mit seinem Finger beispielsweise die Anzeige 14 im Bereich des Sicherheitsbedienelements 28a, so wird dieses Berühren mittels der Anzeige 14 erfasst und der Nutzer bedient oder betätigt das Sicherheitsbedienelement 28a. In der Folge werden die Funktionsbedienelemente 26a-n freigegeben, so dass dann der Nutzer das jeweilige Fahrmanöver tatsächlich bewirken kann, indem der Nutzer eines der Funktionsbedienelemente 26a-n betätigt, das heißt die Anzeige 14 im Bereich des jeweiligen, gewünschten Funktionsbedienelements 26a-n berührt.

In Fig. 1 ist veranschaulicht, dass der Nutzer das Funktionsbedienelement 26a betätigt beziehungsweise die Anzeige 14 im Bereich des Funktionsbedienelements 26a berührt, um dadurch eine der Antriebswalzen oder beide Antriebswalzen einzuschwenken.

Um einen besonders sicheren Betrieb zu realisieren, ist es im Rahmen des Verfahrens optional vorgesehen, dass das jeweilige Funktionsbedienelement 26a-n freigegeben wird, während der Nutzer das jeweilige Sicherheitsbedienelement 28a, 28b betätigt hält, wobei die Funktionsbedienelemente 26a-n für das Bewirken der jeweiligen Funktionen gesperrt werden, wenn eine durch den Nutzer bewirkte Betätigung der Sicherheitsbedienelemente 28a, 28b unterbleibt. Dabei werden die Funktionsbedienelemente 26a-n unmittelbar nach einem Beenden einer durch den Nutzer bewirkten Betätigung der Sicherheitsbedienelemente 28a, 28b gesperrt. Dies bedeutet, dass die Funktionsbedienelemente 26a-n nur dann freigegeben werden, während der Nutzer zumindest eines der Sicherheitsbedienelemente 28a, 28b betätigt. Während aller Zeitspannen, während welchen eine durch den Nutzer bewirkte Betätigung der Sicherheitsbedienelemente 28a, 28b unterbleibt, werden die Funktionsbedienelemente 26a-n für das Bewirken der Funktionen gesperrt. Mit anderen Worten, betätigt der Nutzer eines der Funktionsbedienelemente 26a-n, während der Nutzer keines der Sicherheitsbedienelemente 28a, 28b betätigt, so wird die jeweilige Funktion nicht bewirkt beziehungsweise nicht durch den Hilfsantrieb ausgeführt.

Zum Betätigen des Sicherheitsbedienelements 28a nutzt der Nutzer beispielsweise einen Finger seiner ersten Hand, wobei er zum Betätigen des Funktionsbedienelements 26a einen Finger seiner zweiten Hand nutzt. Dadurch kann sicher vermieden werden, dass die Hände des Nutzers beim Einschwenken der Antriebswalze zwischen diese und das zugeordnete Rad gelangen können, da der Nutzer beide Hände zum Betätigen des Funktionsbedienelements 26a und zum gleichzeitigen Betätigen des Sicherheitsbedienelements 28a am mobilen Endgerät 10 hat.

Beendet der Nutzer das Betätigen des Funktionsbedienelements 26a und/oder beendet der Nutzer das Betätigen des Sicherheitsbedienelements 28a, beziehungsweise wird ein Beenden des durch den Nutzer bewirkten Betätigens des Funktionsbedienelements 26a und/oder des Sicherheitsbedienelements 28a mittels der Anzeige 14 erfasst, so wird die Funktion und vorliegend das Einschwenken der Antriebswalze gestoppt beziehungsweise beendet.

In Fig. 2 ist veranschaulicht, dass der Nutzer eine Vorwärtsfahrt des Anhängers in der vorstehend beschriebenen Weise bewirkt. Hierzu betätigt der Nutzer das Funktionsbedienelement 26g, während der Nutzer das Sicherheitsbedienelement 28a betätigt und betätigt hält. Dabei wird sowohl die durch den Nutzer bewirkte Betätigung des Sicherheitsbedienelements 28a als auch die durch den Benutzer bewirkte Betätigung des freigegebenen Funktionsbedienelements 26g mittels wenigstens eines Symbols auf der Anzeige 14 angezeigt, indem die Farbe der Fläche des Sicherheitsbedienelements 28a und die Farben der Fläche und des Richtungspfeils des Funktionsbedienelements 26g im Vergleich zum nicht-betätigten Zustand verändert werden.

Darüber hinaus wird die durch den Nutzer bewirkte Betätigung des freigegebenen Funktionsbedienelements 26g mittels wenigstens eines Symbols 30 in einem von den Funktionsbedienelementen 26a-n und von den Sicherheitsbedienelementen 28a, 28b unterschiedlichen Bereich 32 der Anzeige 14 beziehungsweise der graphischen Benutzeroberfläche 24 angezeigt. Bei dem Symbol 30 handelt es sich vorliegend um einen Richtungspfeil, welcher die Vorwärtsfahrt charakterisiert. Anhand des Symbols 30 kann der Nutzer auch dann, wenn er das Funktionsbedienelement 26g und das Sicherheitsbedienelement 28a mit seinen jeweiligen Fingern vollständig überdeckt, erkennen, dass die Betätigung des Funktionsbedienelements 26g und des Sicherheitsbedienelements 28a erfolgreich ist und die jeweilige Funktion tatsächlich von dem Hilfsantrieb ausgeführt wird.

Dadurch, dass die Sicherheitsbedienelemente 28a, 28b bezogen auf die Hochrichtung des mobilen Endgeräts 10 in einem unteren Bereich der Anzeige 14 angeordnet sind, ist eine gute und einfache Bedienung gewährleistet.

Es ist denkbar, dass durch das Betätigen des Sicherheitsbedienelements 28a, 28b und/oder des jeweiligen Funktionsbedienelements 26a-n wenigstens eine haptische Rückmeldung beziehungsweise ein haptischer Effekt bewirkt wird. Diese haptische Rückmeldung erfolgt beispielsweise dadurch, dass mittels wenigstens eines in den Figuren nicht erkennbaren Vibrationselements des mobilen Endgeräts 10 eine Vibration des mobilen Endgeräts 10, insbesondere über eine vorgebbare Zeitdauer, bewirkt wird, wenn eine durch den Nutzer bewirkte Betätigung eines der Sicherheitsbedienelemente 28a, 28b und/oder eines der insbesondere freigegebenen Funktionsbedienelemente 26a-n erfasst wird. Durch diese haptische Rückmeldung kann dem Nutzer auch haptisch kommuniziert werden, dass eine durch den Nutzer bewirkte Betätigung des Sicherheitsbedienelements 28a beziehungsweise des entsprechenden Funktionsbedienelements 26a-n erfolgt beziehungsweise erfasst wird.

Insgesamt ist aus den Figuren erkennbar, dass das Sicherheitsbedienelement 28a beziehungsweise 28b sozusagen als Totmannschalter fungiert, welcher durch den Nutzer betätigt werden muss und betätigt gehalten werden muss, um die Funktionsbedienelemente 26a-n freizugeben und das jeweilige Fahrmanöver tatsächlich bewirken zu können. Dadurch können ungewollte und unbeabsichtigte Bewegungen des Anhängers infolge von ungewollten und unbeabsichtigten Berührungen zwischen dem Nutzer und der Anzeige 14 vermieden werden, wenn der Nutzer beispielsweise das mobile Endgerät 10 in seine Tasche steckt.

Alternativ oder zusätzlich ist es möglich, auf der Anzeige 14 beziehungsweise mittels der graphischen Benutzeroberfläche 24, insbesondere in dem Bereich 32, wenigstens eine einen Zustand des Hilfsantriebs charakterisierende Information anzuzeigen. Im Rahmen der bidirektionalen Kommunikation übermittelt der Hilfsantrieb beispielsweise Daten und somit Informationen über seinen Zustand. Beispielsweise ist es möglich, mittels der graphischen Benutzeroberfläche eine Störung, eine Überhitzung des Hilfsantriebs und/oder eine andere Information über den Hilfsantrieb anzuzeigen.

Wie bereits erwähnt, stellt die vorstehend beschriebene Betriebsweise und insbesondere das Vorsehen der Sicherheitsbedienelemente 28a, 28b lediglich eine bevorzugte Möglichkeit zur Betätigung des Hilfsantriebs dar. Generell kann aber auf die Sicherheitsbedienelemente 28a, 28b verzichtet werden. Ebenso kann die GUI 24 mehr oder weniger Funktionsbedienelemente 26a-n mit gleichen oder abweichenden Funktionalitäten aufweisen.

In Fig. 3 bis Fig. 6 sind jeweils schematische Draufsichten der Anzeige 14 bzw. des GUI 24 des erfindungsgemäßen Endgeräts 10 dargestellt. Man erkennt, dass exemplarisch in der rechten oberen Ecke der GUI 24 ein vorliegend als Dreieck ausgebildetes Symbol 34 angezeigt wird, über welches einem Nutzer des Endgeräts 10 eine Steigungsinformation bereitgestellt wird, welche eine Steigung eines momentan vom Anhänger befahrenen Geländes und/oder eines vom Anhänger zu befahrenden Geländes charakterisiert. Das Symbol 34 stellt mit anderen Worten eine Steigungsanzeige dar, die dem Nutzer die momentan befahrene Steigung anzeigt. Die Steigungsanzeige kann beispielsweise zusätzlich über Zahlenwerte in Prozent und/oder Grad und/oder farblich kodiert werden. Ebenso kann die Steigung des Dreieck-Symbols 34 mit der aktuellen Steigung korrespondieren. Die Zahlenwerte der Steigung sind in Fig. 3 bis Fig. 6 aus Gründen der Übersichtlichkeit nicht dargestellt. Der Steigungswinkel kann durch wenigstens einen Beschleunigungssensor auf der Hauptsteuerungsplatine (nicht gezeigt) im Anhänger erfasst und über die Kommunikationsschnittstelle (z. B. Funk) zum Endgerät 10 übermittelt werden. Alternativ oder zusätzlich können aber auch andere Sensortypen und/oder Datenquellen zum Ermitteln der Steigungsinformation herangezogen werden, beispielsweise ein oder mehrere Positionssensoren und/oder ein oder mehrere Neigungssensoren. Vorzugsweise werden zwei oder mehr Beschleunigungssensoren verwendet. Die zwei oder mehr Beschleunigungssensoren können vorteilhaft eine Messung in zwei oder drei Raumachsen vornehmen, beispielsweise in einer Fahrtrichtung und in einer Hochrichtung. Weiterhin umfasst die GUI 24 ein optionales Symbol 36, welches einen Ladezustand einer Stromquelle, insbesondere einer Batterie bzw. eines Akkus des Hilfsantriebs, anzeigt.

Beim momentanen oder abzusehenden Befahren einer kritischen Steigung kann der Nutzer aktiv gewarnt bzw. vorgewarnt werden. Dies kann durch eine Farbe bzw. einen Farbumschlag, beispielsweise Grün (OK) -> Gelb/Orange (Achtung) -> Rot (Gefahr) und/oder einen Signalton und/oder ein haptisches Signal und/oder einen Hinweisbildschirm (Pop-Up) geschehen.

In Fig. 3 kann durch Betätigung des Funktionsbedienelements 26b die jeweilige, dem jeweiligen Rad zugeordnete Antriebswalze eingeschwenkt werden. Sobald die Antriebswalzen eingeschwenkt sind, wird dies durch eine abweichende Einfärbung des Symbols 26a sowie im Bereich 32 durch das Symbol 30 kenntlich gemacht. Dieser Zustand ist in Fig. 4 dargestellt. Anschließend können über die anderen Funktionsbedienelemente 26c-n unterschiedliche Bewegungen beziehungsweise Fahr- oder Rangiermanöver des Anhängers über den Hilfsantrieb bewirkt werden, gegebenenfalls wie vorstehend beschrieben unter entsprechender Betätigung des oder der Sicherheitsbedienelemente 28a bzw. 28b. Die Sicherheitsbedienelemente 28a bzw. 28b werden vorliegend exemplarisch als verriegelte oder offene Vorhängeschlösser angezeigt. Es versteht sich, dass auch andere grafische Symbole vorgesehen sein können.

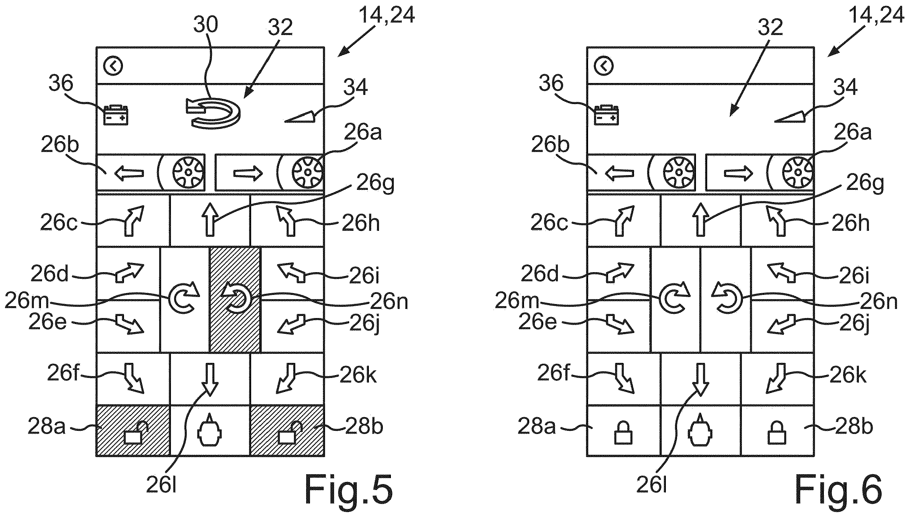

In Fig. 5 wird der Anhänger um die Hochachse gegen den Uhrzeigersinn gedreht, da dem Nutzer über das Symbol 34 und/oder eine haptische und/oder akustische Warnung mitgeteilt wurde, dass eine unzulässige Steigung befahren bzw. angesteuert wird. Die Drehung um die Hochachse kann durch manuelle Betätigung der Taste 26n erfolgen. Ebenso kann vorgesehen sein, dass das Endgerät 10 eine oder mehrere der Tasten 26an optisch kenntlich macht, um dem Nutzer eine Empfehlung über eine sinnvolle Bewegung des Anhängers zu geben, welche das Befahren einer unzulässigen Steigung vermeidet. Alternativ oder zusätzlich kann vorgesehen sein, dass das Endgerät 10 den Hilfsantrieb selbständig dazu veranlasst, die Betriebsweise bzw. die Richtung des Anhängers zu verändern, um das Befahren einer unzulässigen Steigung zu verhindern. Vorzugsweise erfolgt dann die weitere Bewegung des Anhängers - manuell, halbautomatisch oder automatisch bewirkt - in Richtung eines angrenzenden Geländes mit tolerablen Steigungswerten.

In Fig. 6 hat der Anhänger seine gewünschte Endposition erreicht, so dass über die Taste bzw. Schaltfläche 26b die Antriebswalzen wieder ausgeschwenkt werden können.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

### BEZUGSZEICHENLISTE

- 10: Endgerät
- 12: Gehäuse
- 14: Anzeige
- 16: Doppelpfeil
- 18: Lautsprecher
- 20: Kamera
- 22: Bedienelement
- 24: graphische Benutzeroberfläche (GUI)
- 26a-n: Funktionsbedienelemente
- 28a, b: Sicherheitsbedienelement
- 30: Symbol
- 32: Bereich
- 34: Symbol
- 36: Symbol

## Patentansprüche

1. Verfahren zum Betreiben eines Hilfsantriebs für einen Anhänger, bei welchem zumindest ein über eine Kommunikationsverbindung mit dem Hilfsantrieb verbundenes Endgerät (10) einem Nutzer über wenigstens eine Mensch-Maschine-Schnittstelle eine Steigungsinformation bereitstellt, welche eine Steigung eines momentan vom Anhänger befahrenen Geländes und/oder eines vom Anhänger zu befahrenden Geländes charakterisiert.

2. Verfahren nach Anspruch 1,
**dadurch gekennzeichnet, dass**
die Steigungsinformation optisch und/oder akustisch und/oder haptisch bereitgestellt wird.

3. Verfahren nach Anspruch 2,
**dadurch gekennzeichnet, dass**
die Steigungsinformation optisch als Symbol (34), insbesondere als ein die Steigung charakterisierendes Dreieck, und/oder als eine die Steigung charakterisierende Gradangabe und/oder als eine die Steigung charakterisierende Prozentangabe und/oder als eine die Steigung charakterisierende Farbinformation bereitgestellt wird und/oder dass die Steigungsinformation haptisch über ein die Steigung charakterisierendes Vibrationssignal bereitgestellt wird und/oder dass die Steigungsinformation akustisch über eine die Steigung charakterisierende Ton- und/oder Geräuschausgabe bereitgestellt wird.

4. Verfahren nach einem der Ansprüche 1 bis 3,
**dadurch gekennzeichnet, dass**
das Endgerät (10) dem Nutzer über die Mensch-Maschine-Schnittstelle eine Warninformation bereitstellt, wenn das vom Anhänger befahrene Gelände und/oder das vom Anhänger zu befahrende Gelände eine unzulässige Steigung aufweist.

5. Verfahren nach Anspruch 4,
**dadurch gekennzeichnet, dass**
die Warninformation optisch und/oder akustisch und/oder haptisch bereitgestellt wird.

6. Verfahren nach Anspruch 5,
**dadurch gekennzeichnet, dass**
die Warninformation optisch als Symbol (30) und/oder in Form eines Farbumschlags und/oder über eine Hinweismeldung und/oder haptisch über ein Vibrationssignal und/oder akustisch über einen Warnton bereitgestellt wird.

7. Verfahren nach einem der Ansprüche 1 bis 6,
**dadurch gekennzeichnet, dass**
das Endgerät (10) versucht, den Hilfsantrieb zu einer Betriebsänderung zu veranlassen, wenn das vom Anhänger befahrene Gelände und/oder das vom Anhänger zu befahrende Gelände eine unzulässige Steigung aufweist.

8. Verfahren nach einem der Ansprüche 1 bis 7,
**dadurch gekennzeichnet, dass**
die Steigungsinformation mittels einer Steuereinrichtung anhand von wenigstens einem Betriebsparameter ermittelt wird, welcher aus einer Gruppe gewählt wird, die Geschwindigkeit und/oder Beschleunigung des Anhängers, Leistungsaufnahme des Hilfsantriebs, Standortinformation des Hilfsantriebs und/oder des Anhängers und/oder Bildinformation des vom Anhänger befahrenen Geländes und/oder des vom Anhänger zu befahrenden Geländes umfasst.

9. System zum Antreiben wenigstens eines Rads eines Anhängers, umfassend wenigstens einen Hilfsantrieb zum Antreiben des Rads, wobei der Hilfsantrieb über eine Kommunikationsverbindung mit einem wenigstens eine Mensch-Maschine-Schnittstelle aufweisenden Endgerät (10) für einen Nutzer verbindbar und/oder verbunden ist,
**dadurch gekennzeichnet, dass**
das Endgerät (10) dazu ausgebildet ist, mittels der Mensch-Maschine-Schnittstelle eine Steigungsinformation bereitzustellen, welche eine Steigung eines momentan vom Anhänger befahrenen Geländes und/oder eines vom Anhänger zu befahrenden Geländes charakterisiert.

10. System nach Anspruch 9,
**dadurch gekennzeichnet, dass**
die Kommunikationsverbindung drahtlos und/oder kabelgebunden bewirkt und/oder bewirkbar ist und/oder dass das Endgerät (10) als mobiles Endgerät, insbesondere als Fernbedienung und/oder Mobiltelefon und/oder tragbarer Computer, ausgebildet ist.

11. System nach Anspruch 9 oder 10,
**dadurch gekennzeichnet, dass**
der Anhänger als Wohnwagen, Bootsanhänger, Verkaufswagen, Transportanhänger oder Autotransportanhänger ausgebildet ist.

12. System nach einem der Ansprüche 9 bis 11,
**dadurch gekennzeichnet, dass**
die Mensch-Maschine-Schnittstelle einen vorzugsweise berührungsempfindlichen Bildschirm (14) und/oder wenigstens einen haptischen Aktuator und/oder wenigstens einen Lautsprecher zum Bereitstellen der Steigungsinformation umfasst.

13. System nach einem der Ansprüche 9 bis 12,
**dadurch gekennzeichnet, dass**
der Hilfsantrieb wenigstens einen Beschleunigungssensor aufweist, mittels welchem die Steigungsinformation ermittelbar ist.

14. Computerprogrammprodukt, welches in einen Speicher eines Endgeräts (10) eines Systems nach einem der Ansprüche 9 bis 13 ladbar ist, mit Programm-Mitteln, um die Schritte des Verfahrens nach einem der Ansprüche 1 bis 8 auszuführen, wenn das Programm durch das Endgerät (10) ausgeführt wird.

15. Elektronisch lesbarer Datenträger mit darauf gespeicherten elektronisch lesbaren Steuerinformationen, welche zumindest ein Computerprogrammprodukt nach Anspruch 14 umfassen und derart ausgestaltet sind, dass sie bei Verwendung des Datenträgers in einem Endgerät (10) eines Systems nach einem der Ansprüche 9 bis 13 ein Verfahren nach einem der Ansprüche 1 bis 8 durchführen.

16. Anhänger, insbesondere Wohnwagen, Bootsanhänger, Verkaufswagen, Transportanhänger, oder Autotransportanhänger, mit wenigstens einem System nach einem der Ansprüche 9 bis 13.
